Europäisches Patentamt

European Patent Office

Office européen des brevets

(19)

(11) **EP 0 928 258 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(21) Anmeldenummer: **98923999.1**

(22) Anmeldetag: **13.03.1998**

(51) Int Cl.$^7$: **B60R 21/00**, B60R 21/01, G01C 9/08

(86) Internationale Anmeldenummer:
**PCT/DE98/00739**

(87) Internationale Veröffentlichungsnummer:
**WO 99/05004 (04.02.1999 Gazette 1999/05)**

(54) **VERFAHREN UND ANORDNUNG ZUM ERMITTELN DER INERTIALLAGE EINES FAHRZEUGS**

METHOD AND DEVICE FOR DETERMINING A VEHICLE INERTIAL POSITION

PROCEDE ET DISPOSITIF POUR DETERMINER LA POSITION INERTIELLE D'UN VEHICULE

(84) Benannte Vertragsstaaten:
**DE FR GB SE**

(30) Priorität: **25.07.1997 DE 19732081**

(43) Veröffentlichungstag der Anmeldung:
**14.07.1999 Patentblatt 1999/28**

(73) Patentinhaber: **ROBERT BOSCH GMBH**
**70442 Stuttgart (DE)**

(72) Erfinder: **PANTLE, Markus**
**D-71634 Ludwigsburg (DE)**

(56) Entgegenhaltungen:
**EP-A- 0 430 813**       **EP-A- 0 709 256**
**EP-A- 0 709 257**       **DE-A- 19 609 176**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Stand der Technik

In der nicht vorveröffentlichten deutschen Patentanmeldung 196 09 717.1 ist eine Anordnung zum Erkennen von Überrollvorgängen bei Fahrzeugen beschrieben. Falls es zu einem Überschlag eines Fahrzeugs kommt, müssen rechtzeitig alle im Fahrzeug installierten Insassen-Schutzvorrichtungen ausgelöst werden; dazu gehören beispielsweise Überrollbügel, Gurtstraffer und verschiedene Airbags. Damit all diese Schutzvorrichtungen rechtzeitig ausgelöst werden können, muß möglichst früh erkannt werden, ob Drehungen des Fahrzeugs um seine Hochachse, seine Längsachse oder seine Querachse zu einem Überschlag führen. Fehlentscheidungen eines Überrollvorganges müssen soweit wie möglich ausgeschlossen werden, so daß die Rückhalteeinrichtungen dann nicht ausgelöst werden, wenn z. B. das Fahrzeug an einem steilen Hang steht oder langsame Drehvorgänge bei Kurvenfahrten erfährt. Damit es nicht zu Fehlentscheidungen bei der Überrollsensierung kommt, muß die Inertiallage, d.h. die Ausgangslage des Fahrzeugs relativ zum erdfesten Koordinatensystem, bekannt sein. Dynamische Fahrzeugbewegungen, wie z.B. Kurvenfahrten oder Brems- oder Beschleunigungsvorgänge können sich störend bei der Ermittlung der Inertiallage auswirken. Deshalb liegt der Erfindung die Aufgabe zugrunde, ein Verfahren und eine Anordnung zum Ermitteln der Inertiallage eines Fahrzeugs anzugeben, wobei Störeinflüsse durch dynamische Fahrzeugbewegungen möglichst weitgehend ausgeschlossen werden.

Vorteile der Erfindung

Die genannte Aufgabe wird mit den Merkmalen des Anspruchs 1 bzw. des Anspruchs 6 dadurch gelöst, daß zunächst die Beschleunigungen des Fahrzeugs in Richtung seiner Längs-, seiner Quer- und seiner Hochachse gemessen werden. Darauf wird der Betrag eines aus den drei Beschleunigungskomponenten resultierenden Beschleunigungsvektors gebildet und dieser Betrag durch Schwellenwertentscheidungen mit einem Fenster verglichen, das durch eine oberhalb und eine unterhalb der Erdbeschleunigung liegende Schwelle begrenzt ist. Der aktuelle Lagewinkel des Fahrzeugs bezüglich seiner Längsachse und/oder der aktuellen Lagewinkel bezüglich seiner Querachse wird nur dann ermittelt, wenn der Betrag des Beschleunigungsvektors innerhalb des Fensters liegt. Liegt aber der Betrag des Beschleunigungsvektors außerhalb des Fensters, so wird an einem zuvor ermittelten Lagewinkel bezüglich der Längsachse und/oder Lagewinkel bezüglich der Querachse festgehalten.
Bei diesem Verfahren bzw. einer entsprechenden Anordnung zur Durchführung dieses Verfahrens werden mit Hilfe der Fensterfunktion dynamische Beschleunigungskomponten des Fahrzeugs bei der Ermittlung der Inertiallage ausgeschlossen. Die Lagewinkel der Inertiallage können dann korrekt gemessen werden mit den drei Beschleunigungssensoren, wenn entweder das Fahrzeug sich gar nicht oder gleichförmig bewegt. Unterliegt das Fahrzeug dynamischen Lageveränderungen, so werden keine neuen aktuellen Lagewinkel ermittelt, sondern es wird auf vorhergehend ermittelte, von dynamischen Lageveränderungen unbeeinflußte Lagewinkel zurückgegriffen.
Gemäß einem Unteranspruch ist es vorteilhaft, daß die obere Schwelle des Fensters etwa um 10 % größer und die untere Schwelle etwa 10 % niedriger als die Erdbeschleunigung ist. Störgrößen bei der Ermittlung der Inertiallage lassen sich gemäß einem Unteranspruch noch effektiver unterdrücken, wenn mit jeweils zwei zeitlich nacheinander gebildeten Beschleunigungsvektoren die Schwellenwertentscheidungen durchgeführt werden. Dadurch, daß der aktuelle Lagewinkel rekursiv aus einem Anteil eines früher ermittelten Lagewinkels und einem Anteil des aus den aktuell gemessenen Beschleunigungen hergeleiteten Lagewinkels gebildet wird, lassen sich vorteilhafterweise kurzzeitige Störungen sehr gut unterdrücken.
Bei Überrollvorgängen handelt es sich um sehr schnelle Lageänderungen des Fahrzeugs, die am besten durch Drehratenmessungen erfaßt werden können. Aus den gemessenen Drehraten werden dann die Lagewinkel durch Integration abgeleitet und anhand dieser Lagewinkel entschieden, ob es zu einem Überschlag des Fahrzeugs kommt oder nicht. Damit bei der Integration der gemessenen Drehraten nicht auch für einen Überrollvorgang unkritische dynamische Fahrzeugbewegungen mit einfließen und die daraus folgenden Lagewinkel nicht zu einer Fehlentscheidung bezüglich eines Überrollvorgangs führen, ist es zweckmäßig, die Integration der Drehraten erst mit den nach der Erfindung hergeleiteten Inertial-Lagewinkeln zu starten.

Zeichnung

Anhand eines in der Zeichnung dargestellten Ausführungsbeispiels wird nachfolgend die Erfindung näher erläutert. Es zeigen:

Figur 1 ein erdfestes und ein fahrzeugfestes Koordinatensystem,
Figur 2 ein Funktionsdiagramm für die Herleitung der Inertiallage des Fahrzeugs und

Figur 3 eine Fensterfunktion.

Beschreibung eines Ausführungsbeispiels

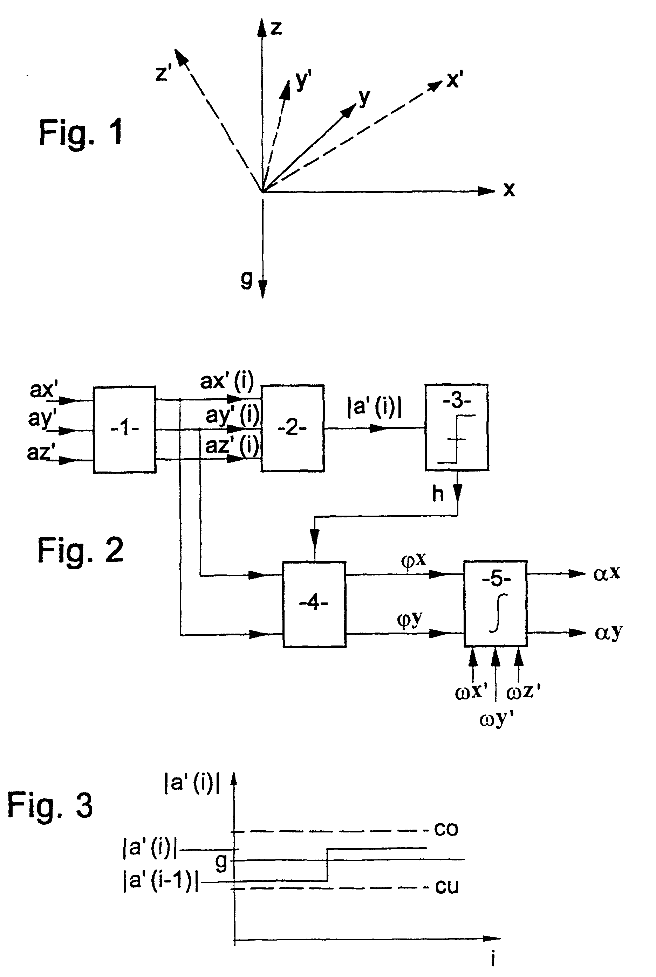

In der Figur 1 ist ein erdfestes Koordinatensystem x, y, z eingezeichnet, daß so orientiert ist, daß die Erdbeschleunigung g in Richtung der z-Achse wirkt. Ebenfalls ist in Figur 1 ein fahrzeugfestes Koordinatensystem x', y', z' eines Fahrzeugs einzeichnet, das eine gewisse Schräglage gegenüber dem erdfesten Koordinatensystem aufweist. Bei dem fahrzeugfesten Koordinatensystem ist x' die Längsachse, y' die Querachse und z' die Hochachse des Fahrzeugs. In dem Fahrzeug befinden sich Beschleunigungssensoren, welche die Beschleunigungskomponenten des Fahrzeugs in Richtung seiner Längsachse x', seiner Querachse y' und seiner Hochachse z' messen. Die Erdbeschleunigung g teilt sich entsprechend der Lage des fahrzeugfesten Koordinatensystems x', y', z' auf die einzelnen Beschleunigungskomponenten ax', ay' und az' auf. Wenn nun der Erdbeschleunigung g infolge von dynamischen Fahrzeugbewegungen ein oder mehrere weitere Beschleunigungskomponenten überlagert sind, so können aus den gemessenen Beschleunigungskomponenten ax', ay' und az' nicht mehr fehlerfrei die tatsächlichen Lagewinkel des Fahrzeugs relativ zum erdfesten Koordinatensystem bestimmt werden. In der Regel werden der Lagewinkel φx, das ist der Drehwinkel des fahrzeugfesten Koordinatensystems um die x-Achse des erdfesten Koordinatensystems, und der Lagewinkel φy, daß ist der Drehwinkel des fahrzeugfesten Koordinatensystems um die y-Achse des erdfesten Koordinatensystems, benötigt, um die Inertiallage des Fahrzeugs zu beschreiben. Die beiden Lagewinkel φx und φy können durch trigonometrische Funktionen aus den Beschleunigungskomponenten ax', ay' und az' und der Erdbeschleunigung g hergeleitet werden. Sind nun den Beschleunigungskomponenten ax', ay', az' Störgrößen durch dynamische Fahrzeugbewegungen überlagert, führt das zu verfälschten Lagewinkeln φx und φy des Fahrzeugs.

Anhand des in der Figur 2 dargestellten Funktionsdiagramms wird nun eine Methode beschrieben, wie aus den im Fahrzeug gemessenen Beschleunigungskomponenten ax', ay' und az' Lagewinkel φx und φy ermittelt werden können, die weitestgehend von Störgrößen durch dynamische Fahrzeugbewegungen unbeeinflußt sind. Im Funktionsblock 1 werden die gemessenen Beschleunigungskomponenten ax', ay' und az' einer Filterung unterzogen. Die Filterung dient dazu, um kleine Störungen der einzelnen Beschleunigungskomponenten herauszufiltern. Ein geeignetes Filter ist z.B. ein Medianfilter oder ein anderes digitales Filter mit Tiefpaßcharakteristik. Bei einem Medianfilter wird jeder Beschleunigungskomponente ax', ay', az' über eine gewisse Zeitdauer abgetastet und sämtliche Abtastwerte werden in mehrere Datentuppel unterteilt. Von jedem Datentuppel wird der mittlere Abtastwert bestimmt. Unter der Annahme, daß es i Datentuppel von jeder Beschleunigungskomponente ax', ay' und az' gibt, liegen an den Ausgängen des Filters 1 die gefilterten Beschleunigungskomponenten ax'(i), ay'(i) und az'(i) an.

Im zweiten Funktionblock 2 wird aus den gefilterten Beschleunigungskomponenten ax'(i), ay'(i) und az'(i) ein resultierender Beschleunigungsvektor und von diesem der Betrag

$$|a'(i)| = \sqrt{ax'(i)^2 + ay'(i)^2 + az'(i)^2} \tag{1}$$

gebildet.

Im Schaltblock 3 wird der Betragung des Beschleungigsvektors |a'(i)| einer Schwellenwertentscheidung unterzogen. Wie in der Figur 3 dargestellt, handelt es sich hierbei um eine Fensterfunktion. Dieses Fenster hat eine obere Schwelle co und eine untere Schwelle cu. Dabei ist die obere Schwelle co um etwa 10 % größer als die Erdbeschleunigung g und die untere Schwelle cu um etwa 10 % kleiner als die Erdbeschleunigung g. Durch diese Fensterfunktion wird also festgestellt, ob der Betrag des Beschleunigungsvektors etwa dem der Erdbeschleunigung g entspricht. Weicht nämlich der Betrag des Beschleunigungsvektors um ein gewisses Maß, das durch die Schwellen co und cu vorgegeben ist, von der Erdbeschleunigung g ab, so muß davon ausgegangen werden, daß den im Fahrzeug gemessenen Beschleunigungskomponenten ax', ay' und az' Störkomponenten aufgrund von dynamischen Fahrzeugbewegungen überlagert sind. Der Schaltblock 3 setzt sein Ausgangssignal h auf 1, wenn der Betrag des Beschleunigungsvektors innerhalb des Fensters liegt und setzt sein Ausgangssignal h auf 0, wenn der Betrag des Beschleunigungsvektors außerhalb des Fensters liegt. Man kann auch, wie in Figur 3 dargestellt, jeweils zwei zeitlich nacheinander am Schaltblock 3 anliegende Beschleunigungsvektoren bezüglich ihrer Lage in dem vorgegebenen Fenster betrachten. Das heißt, nur wenn die Beträge der zum Zeitpunkt i und zum Zeitpunkt i - 1 anliegenden Beschleunigungsvektoren beide innerhalb des vorgegebenen Fensters liegen, wird das Signal h auf 1 gesetzt, andernfalls auf 0.

$$h = \begin{cases} 1, & \text{wenn } |a'(i)| \text{ und } |a'(i-1)| \text{ innerhalb des Fensters} \\ 0 & \text{sonst} \end{cases} \qquad (2)$$

Im Funktionsblock 4 werden mit Hilfe der nachfolgend beschriebenen Rechenprozedur aus den Beschleunigungskomponenten ax' und ay' die Lagewinkel φx und φy hergeleitet. In der Gleichung (3) ist der trigonometrische Zusammenhang zwischen den im Fahrzeug gemessenen Beschleunigungskomponenten ax', ay', az' und den Beschleunigungskomponenten bezüglich des erdfesten Koordinantensystems x, y, z dargestellt. Da die Erdbeschleunigung g nur in Richtung z-Achse des erdfesten Koordinatensystem wirkt, sind Beschleunigung ax und ay in Richtung der x-Achse und der y-Achse des erdfesten Koordinatensystems 0. Es gilt daher:

$$\begin{bmatrix} ax' \\ ay' \\ az' \end{bmatrix} = \begin{bmatrix} \cos\varphi y & 0 & -\sin\varphi y \\ \sin\varphi x \sin\varphi y & \cos\varphi x & \sin\varphi x \cos\varphi y \\ \cos\varphi x \sin\varphi y & -\sin\varphi x & \cos\varphi x \cos\varphi y \end{bmatrix} \begin{bmatrix} 0 \\ 0 \\ -g \end{bmatrix} \qquad (3)$$

$$\begin{bmatrix} ax' \\ ay' \\ az' \end{bmatrix} = \begin{bmatrix} \sin\varphi y \\ -\sin\varphi x \cos\varphi y \\ -\cos\varphi x \cos\varphi y \end{bmatrix} \cdot g \qquad (4)$$

$$\varphi y = \arcsin \frac{ax'}{g} \qquad (5)$$

$$\varphi x = -\arcsin \frac{ay'}{g \cos\varphi y} \qquad (6)$$

Wenn das Fenstersignal h = 1 ist, kann es aber trotzdem zu Fehlern bei der Berechnung der Lagewinkel kommen, wenn nämlich z.B. ein resultierender Vektor aus störenden Beschleunigungen und der Erdbeschleunigung zufällig den Betrag von 1g hat. Damit ein solcher Fehler nicht auftreten kann, ist es zweckmäßig, jeden neuen Lagewinkel $\varphi x_{neu}$ und $\varphi y_{neu}$ rekursiv aus einem Anteil eines früher ermittelten Lagewinkels $\varphi x_{alt}$ und $\varphi y_{alt}$ und einem Anteil der aus den aktuell gemessenen Beschleunigungen hergeleiteten Lagewinkeln φx und φy zu berechnen:

$$\varphi x_{neu} = c1 \; \varphi x_{alt} + c2 \; \varphi x \qquad (7)$$

$$\varphi y_{neu} = c1 \; \varphi y_{alt} + c2 \; \varphi y \qquad (8)$$

Die Wichtungsfaktoren c1 und c2 in den Gleichungen (7) und (8) müssen experimentell bestimmt werden. Sie liegen zwischen 0 und 1 und haben Tiefpaßeigenschaften.

Falls Überrollvorgänge des Fahrzeugs sensiert werden sollen, ist ein Funktionsblock 5 vorgesehen, der durch Integration von gemessenen Drehraten ωx', ωy', ωz' um die Längsachse x', die Querachse y' und die Hochachse z' des Fahrzeugs die Drehwinkel αx und αy des Fahrzeugs um die erdfeste x- und y-Achse ermittelt. Damit bei der Integration nicht auch geringfügige dynamische Lageänderungen des Fahrzeugs mit einfließen, wird die Integration mit den zuvor ermittelten Lagewinkeln φx und φy gestartet; denn diese Lagewinkel φx und φy sind weitgehend unbeeinflußt von störenden dynamischen Fahrzeugbewegungen (z.B. Kurvenfahrten, Beschleunigungs- und Bremsvorgänge).

**EP 0 928 258 B1**

**Patentansprüche**

1. Verfahren zum Ermitteln der Inertiallage eines Fahrzeugs, **dadurch gekennzeichnet,**

   - **daß** die Beschleunigungen (ax', ay', az') des Fahrzeugs in Richtung seiner Längs- (x'), seiner Quer- (y') und seiner Hochachse (z') gemessen werden,
   - **daß** der Betrag (|a'(i)|) des Beschleunigungsvektors durch Schwellenwertentscheidung (3) mit einem Fenster verglichen wird, das durch eine oberhalb und eine unterhalb der Erdbeschleunigung (g) liegende Schwelle (co, cu) begrenzt ist,
   - **daß** nur dann der aktuelle Lagewinkel (φx) des Fahrzeugs bezüglich seiner Längsachse (x')und/oder der aktuelle Lagewinkel (φy) bezüglich seiner Querachse (y')ermittelt wird, wenn der Betrag (|a'(i)|) des Beschleunigungsvektors innerhalb des Fensters liegt,
   - und **daß**, wenn der Betrag (|a'(i)|) des Beschleunigungsvektors außerhalb des Fensters liegt, an einem zuvor ermittelten Lagewinkel (φx) bezüglich der Längsachse (x') und/oder Lagewinkel (φy) bezüglich der Querachse (y') festgehalten wird.

2. Verfahren nach Anspruch 1, **dadurch gekennzeichnet, daß** die obere Schwelle (co) etwa um 10 % größer ist als die Erdbeschleunigung (g) und die untere Schwelle (cu) etwa 10 % niedriger als die Erdbeschleunigung (g) ist.

3. Verfahren nach Anspruch 1, **dadurch gekennzeichnet, daß** mit jeweils zwei zeitlich nacheinander gebildeten Beschleunigungsvektoren (a'(i), a'(i-1)) die Schwellenwertentscheidungen durchgeführt werden und daß nur dann der aktuelle Lagewinkel (φx) bezüglich der Längsachse (x') und/oder der aktuelle Lagewinkel (φy) bezüglich der Querachse (y') ermittelt wird, wenn die Beträge |a'(i)|, |a'(i-1)| beider Beschleunigungsvektoren innerhalb des Fensters liegen.

4. Verfahren nach Anspruch 1 oder 3, **dadurch gekennzeichnet, daß** der aktuelle Lagewinkel rekursiv aus einem Anteil eines früher ermittelten Lagewinkels und einem Anteil des aus den aktuell gemessenen Beschleunigungen hergeleiteten Lagewinkels gebildet wird.

5. Verfahren nach einem der vorhergehenden Ansprüche, **dadurch gekennzeichnet, daß** bei der Herleitung eines Drehwinkels (αx) um die Fahrzeug-Längsachse und/oder eines Drehwinkels (αy) um die Fahrzeug-Querachse durch Integration (5) eine oder mehrere gemessene Drehraten (ωx', ωy', ωz') die Integration mittels des(der) ermittelten Lagewinkel (φx, φy) gestartet wird.

6. Anordnung zum Ermitteln der Inertiallage eines Fahrzeugs, **dadurch gekennzeichnet,**

   - **daß** Beschleunigungssensoren die Beschleunigungen (ax', ay', az') des Fahrzeugs in Richtung seiner Längs- (x'), seiner Quer- (y') und seiner Hochachse (z') messen,
   - **daß** Mittel (2) vorhanden sind, die den Betrag (|a'(i)|) eines aus den drei gemessenen Beschleunigungskomponenten (ax', ay', az') resultierenden Beschleunigungsvektors bilden,
   - **daß** die Mittel (3) den Betrag (|a'(i)|) des Beschleunigungsvektors durch Schwellenwertentscheidungen mit einem Fenster vergleichen, das durch eine oberhalb und eine unterhalb der Erdbeschleunigung (g) liegende Schwelle (co, cu) begrenzt ist,
   - und **daß** die Mittel (4) nur dann den aktuellen Lagewinkel (φx) des Fahrzeugs bezüglich seiner Längsachse (x') und/oder den aktuellen Lagewinkel (φy) bezüglich seiner Querachse (y') bestimmen, wenn der Betrag (|a'(i)|) des Beschleunigungsvektors innerhalb des Fensters liegt, ansonsten aber an dem (den) zuvor ermittelten Lagewinkel(n) festhalten.

**Claims**

1. Method for determining the inertial position and attitude of a vehicle, **characterized**

   - **in that** the accelerations (ax', ay', az') of the vehicle are measured in the direction of its longitudinal axis (x'), its lateral axis (y') and its vertical axis (z'),
   - **in that** the magnitude (|a'(i)|) of the acceleration vector is compared by means of a threshold value decision (3) with a window which is bounded by a threshold (co) located above the acceleration due to gravity (g) and a threshold (cu) which is located below the acceleration due to gravity (g),

- **in that** the present attitude angle (φx) of the vehicle with respect to its longitudinal axis (x') and/or the present attitude angle (φy) with respect to its lateral axis (y') is determined only when the magnitude (|a'(i)|) of the acceleration vector is within the window,
- and **in that**, if the magnitude (|a'(i)|) of the acceleration vector is outside the window, it is fixed at a previously determined attitude angle (φx) with respect to the longitudinal axis (x') and/or attitude angle (φy) with respect to the lateral axis (y').

2. Method according to Claim 1, **characterized in that** the upper threshold (co) is about 10% greater than the acceleration due to gravity (g), and the lower threshold (cu) is about 10% less than the acceleration due to gravity (g).

3. Method according to Claim 1, **characterized in that** the threshold value decisions are in each case made using two acceleration vectors (a'(i), a'(i-1)) formed successively in time, and **in that** the present attitude angle (φx) with respect to the longitudinal axis (x') and/or the present attitude angle (φy) with respect to the lateral axis (y') is determined only when the magnitudes (|a'(i)|, |a'(i-1)|) of both acceleration vectors are within the window.

4. Method according to Claim 1 or 3, **characterized in that** the present attitude angle is formed recursively from a component of a previously determined attitude angle and a component of the attitude angle derived from the currently measured accelerations.

5. Method according to one of the preceding claims, **characterized in that**, when deriving a rotation angle (αx) about the vehicle longitudinal axis and/or a rotation angle (αy) about the vehicle lateral axis by integration(s) of one or more measured rotation rates (ωx', ωy', ωz'), the integration is started by means of the determined attitude angle or angles (φx, φy).

6. Arrangement for determining the inertial position and attitude of a vehicle, **characterized**

- **in that** acceleration sensors measure the accelerations (ax', ay', az') of the vehicle in the direction of its longitudinal axis (x'), its lateral axis (y') and its vertical axis (z'),
- **in that** means (2) are provided which form the magnitude (|a'(i)|) of an acceleration vector which results from the three measured acceleration components (ax', ay', az'),
- **in that** the means (3) compare the magnitude (|a'(i)|) of the acceleration vector by means of threshold value decisions with a window which is bounded by a threshold (co) located above the acceleration due to gravity (g) and a threshold (cu) located below the acceleration due to gravity (g),
- and **in that** the means (4) determine the present attitude angle (φx) of the vehicle with respect to its longitudinal axis (x') and/or the present attitude angle (φy) with respect to its lateral axis (y') only when the magnitude (|a'(i)|) of the acceleration vector is within the window, but otherwise it or they is or are fixed at the previously determined attitude angle or angles.

**Revendications**

1. Procédé pour déterminer la position inertielle d'un véhicule,
   **caractérisé en ce qu'**

   - on mesure les accélérations (ax', ay', az') du véhicule dans la direction de son axe longitudinal (x'), son axe transversal (y') et son axe vertical (z'),
   - on compare l'amplitude (|a'(i)|) du vecteur d'accélération par le décideur de seuil (3) avec une fenêtre délimitée par un seuil (co, cu) situé au-dessus et en dessous de l'accélération terrestre (g),
   - puis, l'angle de position actuel (φx) du véhicule par rapport à son axe longitudinal (x') et/ou l'angle de position actuel (φy) par rapport à son axe transversal (y'), se déterminent si l'amplitude (|a'(i)|) du vecteur d'accélération se situe dans la fenêtre, et
   - si l'amplitude (|a'(i)|) du vecteur d'accélération se situe en dehors de la fenêtre, on retient un vecteur d'angle (φx) déterminé précédemment par rapport à l'axe longitudinal (x') et/ou l'angle de position (φy) par rapport à l'axe transversal (y').

2. Procédé selon la revendication 1,
   **caractérisé en ce que**
   le seuil supérieur (co) dépasse d'environ 10 % l'accélération terrestre (g) et le seuil inférieur (cu) est inférieur d'environ 10 % à l'accélération terrestre (g).

3. Procédé selon la revendication 1,
   **caractérisé en ce que**
   chaque fois avec deux vecteurs d'accélération (a'(i), a'(i-1)) formés successivement dans le temps, on prend des décisions de valeurs de seuil et que, alors l'angle de position actuel ($\varphi x$) concernant l'axe longitudinal (x') et/ou l'angle de position actuel ($\varphi y$) concernant l'axe transversal (y') se déterminent si l'amplitude ($|a'(i)|$, $|a'(i-1)|$ des deux vecteurs d'accélération se situent à l'intérieur de la fenêtre.

4. Procédé selon la revendication 1 ou 3,
   **caractérisé en ce qu'**
   on forme l'angle de position actuel par récurrence à partir d'une composante d'un angle de position déterminé précédemment et d'une fraction de l'angle de position déduit des accélérations actuelles mesurées.

5. Procédé selon l'une des revendications précédentes,
   **caractérisé en ce qu'**
   en déduisant l'angle de rotation ($\alpha x$) autour de l'axe longitudinal du véhicule et/ou un angle de rotation ($\alpha y$) autour de l'axe transversal du véhicule, par intégration (5), on démarre une ou plusieurs imprimantes mesurées ($\omega x'$, $\omega y'$, $\omega z'$) et on lance l'intégration à l'aide de l'angle de position obtenu ($\varphi x$, $\varphi y$).

6. Dispositif pour déterminer la position inertielle d'un véhicule,
   **caractérisé en ce que**

   - des capteurs d'accélération mesurent les accélération (ax', ay', az') du véhicule dans la direction de son axe longitudinal (x'), son axe transversal (y') et de son axe vertical (z'),
   - des moyens (2) sont prévus pour former l'amplitude ($|a'(i)|$) à partir des trois composantes d'accélération mesurées (ax', ay', az') du vecteur d'accélération résultant,
   - les moyens (3) comparent l'amplitude ($|a'(i)|$), du vecteur d'accélération par des décisions à seuil à une fenêtre délimitée par un seuil (co) situé au-dessus de l'accélération terrestre (g) en dessous de celle-ci,
   - et les moyens (4) définissent l'angle de position actuel ($\varphi x$) du véhicule par rapport à son axe longitudinal (x') et/ou l'angle de position ($\varphi y$) actuel par rapport à son axe transversal (y') que si l'amplitude ($|a'(i)|$) du vecteur d'accélération se trouve dans la fenêtre et au cas contraire, on retient l'angle de position (n) déterminé préalablement.

Fig. 1

Fig. 2

Fig. 3